(19) **Europäisches Patentamt / European Patent Office / Office européen des brevets**

(11) **EP 2 171 687 B1**

(12) **FASCICULE DE BREVET EUROPEEN**

(45) Date de publication et mention de la délivrance du brevet:
**10.11.2010 Bulletin 2010/45**

(21) Numéro de dépôt: **09744586.0**

(22) Date de dépôt: **12.06.2009**

(51) Int Cl.:
*G06T 7/00* (2006.01)  *G06T 17/10* (2006.01)

(86) Numéro de dépôt international:
**PCT/EP2009/057313**

(87) Numéro de publication internationale:
**WO 2009/150236 (17.12.2009 Gazette 2009/51)**

(54) **PROCÉDÉ ET DISPOSITIF DE TRAITEMENT D'IMAGE, NOTAMMENT POUR LE TRAITEMENT D'IMAGES MÉDICALES**

VERFAHREN UND VORRICHTUNG ZUR BILDVERARBEITUNG, INSBESONDERE ZUR BEARBEITUNG MEDIZINISCHER BILDER

METHOD AND DEVICE FOR IMAGE PROCESSING, PARTICULARLY FOR MEDICAL IMAGE PROCESSING

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **12.06.2008 FR 0853911**

(43) Date de publication de la demande:
**07.04.2010 Bulletin 2010/14**

(73) Titulaires:
- **Maizeroi-Eugene, Franck**
  **92260 Fontenay Aux Roses (FR)**
- **Renaudie, Franck Sébastien**
  **87100 Limoges (FR)**

(72) Inventeur: **Maizeroi-Eugene, Franck**
**92260 Fontenay Aux Roses (FR)**

(74) Mandataire: **Callon de Lamarck, Jean-Robert et al**
**Cabinet Regimbeau**
**20 rue de Chazelles**
**75847 Paris cedex 17 (FR)**

(56) Documents cités:
**US-A- 4 791 567     US-A- 4 991 224**

- **TREECE G M ET AL: "Surface Interpolation from Sparse Cross Sections Using Region Correspondence" IEEE TRANSACTIONS ON MEDICAL IMAGING, IEEE SERVICE CENTER, PISCATAWAY, NJ, US, vol. 19, no. 11, 1 novembre 2000 (2000-11-01), XP011036036 ISSN: 0278-0062**
- **MEYERS D ET AL: "SURFACES FROM CONTOURS" ACM TRANSACTIONS ON GRAPHICS, ACM, US, vol. 11, no. 3, 1 juillet 1992 (1992-07-01), pages 228-258, XP000306275 ISSN: 0730-0301**
- **ZYDA M J ET AL: "SURFACE CONSTRUCTION FROM PLANAR CONTOURS*" COMPUTERS AND GRAPHICS, ELSEVIER, GB, vol. 11, no. 4, 1 janvier 1987 (1987-01-01), pages 393-408, XP000115889 ISSN: 0097-8493**
- **BAJAJ C L ET AL: "Arbitrary Topology Shape Reconstruction from Planar Cross Sections" CVGIP GRAPHICAL MODELS AND IMAGE PROCESSING, ACADEMIC PRESS, DULUTH, MA, US, vol. 58, no. 6, 1 novembre 1996 (1996-11-01), pages 524-543, XP004418964 ISSN: 1077-3169**
- **HYUNGJUN PARK: "A hybrid approach to smooth surface reconstruction from 2-D cross sections" THE INTERNATIONAL JOURNAL OF ADVANCED MANUFACTURING TECHNOLOGY, SPRINGER, BERLIN, DE, vol. 25, no. 11-12, 1 juin 2005 (2005-06-01), pages 1130-1136, XP019380119 ISSN: 1433-3015**

**EP 2 171 687 B1**

**Description**

L'invention concerne le domaine du traitement d'une suite d'images et plus particulièrement le traitement d'une suite d'images médicales telles que des images d'IRM.

L'analyse purement visuelle et qualitative des images médicales est délicate et nécessite beaucoup d'expérience de la part du praticien. Les possibilités actuelles de traitement informatique des données numériques issues des appareils à but médical tel que les appareils d'imagerie rendent possible la mise en oeuvre d'un procédé d'aide au praticien notamment dans le but d'évaluer le volume des éléments que le praticien souhaite étudier qui sont généralement des anomalies (lésions, tumeur, avc, ...). Des algorithmes plus ou moins performants de recalage d'images, de segmentation et de quantification automatique des anomalies ont été développés. L'objectif est notamment de quantifier l'évolution d'une maladie de façon fiable, objective et reproductible et de réduire le temps passé par le praticien à analyser les images.

L'analyse des images médicales est devenue un point important du diagnostique médical et de l'aspect décisionnel de tout type d'intervention. L'analyse des images s'est sensiblement améliorée notamment par la possibilité d'exploiter numériquement les images médiales (comme les images d'IRM). Une image numérique est en fait un ensemble de données avec une certaine position et une certaine valeur (par exemple un niveau de gris). Un traitement numérique des images revient simplement à manipuler ces données en vue d'obtenir une information désirée. Généralement, un diagnostique médical assisté par l'imagerie permet de générer une série d'images successives représentant un ensemble de coupes successives d'un organe ou d'une partie du corps d'un patient. Comme l'analyse repose essentiellement sur les données numériques d'images, tout le problème est de savoir comment interpréter la réalité à partir de ces données, sachant que celles-ci ne sont qu'une représentation plus ou moins fidèle de la réalité. De plus la difficulté de l'analyse d'une série d'image est de pouvoir faire le lien entre les éléments identifiés sur une image donnée et ceux identifiés dans l'ensemble des autres images de la série.

Actuellement, le calcul de volumes sur des images médicales par exemple du type IRM n'est pas calculé directement en 3D. Il est réalisé à l'aide d'outils informatiques en 2 dimensions (mesure d'une longueur avec une réglette informatique, mesure d'une ellipse, d'un polygone, d'un disque) sur chaque coupe d'image (axiale, sagittale et frontale) puis le praticien effectue manuellement un calcul approximatif. Comme le volume des anomalies (accident vasculaire cérébral dit « AVC » ou tumeur par exemple) est rarement de forme géométrique simple, cette méthode d'extrapolation engendre des imprécisions dans les 3 dimensions et amène donc au final un delta d'erreur amplifié.

Notamment, en notant : n

- A la surface à mesurer sur la coupe axiale et $\Delta a$ son incertitude de mesure dans ce plan de coupe ;
- S la surface à mesurer sur la coupe sagittale et $\Delta s$ son incertitude de mesure dans ce plan de coupe ;
- F la surface à mesurer sur la coupe frontale et $\Delta f$ son incertitude de mesure dans ce plan de coupe,

le calcul du volume V sur images médicales est réalisé à partir de la formule suivante:

$$V = A*S*F \text{ avec une incertitude de } \Delta v = V*(\Delta a/A + \Delta s/S + \Delta f/F)$$

Un but de l'invention est de proposer un procédé et un dispositif de traitement d'une suite d'images amélioré par rapport à l'état de l'art, permettant notamment d'améliorer la précision et la fiabilité du calcul de volume à partir desdites images.

A cet effet, l'invention propose un procédé pour la transmission d'un label entre deux images selon la revendication 1.

Avantageusement mais facultativement, l'invention comprend au moins l'une des caractéristiques suivantes :

- le procédé comprend une étape supplémentaire selon laquelle chaque partie non-commune de la deuxième image étant en contact avec au moins deux ensembles de la première image ayant un label différent est supprimé,
- le procédé comprend une étape supplémentaire selon laquelle un nouveau label est donné à chaque partie non-commune de la deuxième image étant en contact avec au moins deux ensembles de points connectés de la première image ayant un label différent,
- le procédé comprend une étape supplémentaire selon laquelle chaque partie non-commune de la deuxième image étant en contact avec au moins deux ensembles de la première image ayant un label différent reçoit le label de l'un des deux ensembles,
- chaque label est caractérisé par une valeur, le procédé comprenant en outre l'étape suivante :

o créer une équivalence entre les labels de deux ensembles de la première image en contact avec un même ensemble de la deuxième image.

- plusieurs labels sont incompatibles de sorte qu'aucune équivalence n'est crée entre ces labels,
- l'étape de détermination des ensembles comprend au moins l'une des étapes de traitement suivantes : segmentation, application d'un filtre de variance, étape de remplissage connexe.

L'invention concerne également un procédé pour la détermination de volumes à partir de différentes images, chaque image représentant des plans successifs sensiblement parallèles, le procédé comprenant les étapes suivantes :

o choisir une image de départ parmi l'ensemble des images,
o sélectionner des points sur l'image de départ dont on souhaite déterminer le volume,
o déterminer plusieurs ensembles de points connectés sur l'image de départ de façon à ce que les points sélectionnés appartiennent au même ensemble, ledit ensemble ayant un label principal, les autres ensembles ayant un label secondaire,
o mettre en oeuvre le procédé de transmission de label selon l'invention sur l'ensemble des images,
o déterminer le volume correspondant aux ensembles de chaque image comprenant ledit label spécifique.

Avantageusement mais facultativement, ce procédé comprend au moins l'une des caractéristiques suivantes :

- l'étape de détermination de volume comprend une étape d'intégration des aires des ensembles de chaque image comprenant ledit label spécifique,

L'invention concerne également un procédé pour la détermination de volume à partir d'images médicales de scanner ou d'IRM comprenant l'ensemble des étapes du procédé pour la détermination de volumes selon l'invention.
L'invention concerne également un procédé pour la détermination de volume à partir d'image de scanner ou d'IRM d'un cerveau d'un patient, le procédé comprenant l'ensemble des étapes du procédé pour la détermination de volumes selon l'invention, caractérisé en ce qu'il comprend préalablement les étapes suivantes :

o déterminer sur l'image de départ l'ensemble correspondant au crâne du patient,
o déterminer sur l'image de départ l'ensemble correspondant au cerveau du patient.

L'invention concerne également un dispositif pour la détermination de volume à partir d'images médicales par exemple de scanner ou d'IRM caractérisé en ce qu'il comprend des moyens de mise en oeuvre de l'ensemble des étapes du procédé selon l'invention.
L'invention concerne également un dispositif selon la revendication précédente, lequel comprend en outre un appareillage d'acquisition desdites images médicales, comme un appareillage IRM ou de scanner.
L'invention concerne également un produit de programme d'ordinateur comprenant des instructions de code de programme enregistré sur un support utilisable dans un ordinateur pour la mise en oeuvre de l'ensemble des étapes du procédé selon l'invention.
Un tel procédé peut avantageusement être utilisé pour mesurer de manière semi-automatique (par exemple via un clic du praticien sur une zone d'intérêt et éventuellement coloriée par un logiciel correspondant), instantanée, et précise les volumes à partir des images médicales. Un tel procédé peut être avantageusement dédié à des images d'un IRM cérébral, appliqué notamment à la mesure des tumeurs et des accidents vasculaires cérébraux (AVC). En outre le procédé peut également être dédié aux tumeurs du pelvis.
Un tel procédé permet d'obtenir de manière inattendue des mesures précises et rapides du volume d'une anomalie (AVC, légion,...) et servira à décider plus sûrement de l'orientation du traitement du patient ; notamment pour sécuriser la décision d'opération complexe et/ou dangereuse. En effet, une telle décision dépend généralement d'un seuil de volume. Par exemple dans le cas d'un AVC, l'opération est déclenchée si le volume de l'anomalie dépasse un tiers du territoire sylvien du cerveau. Ainsi avec un procédé de calcul de volume selon l'invention, ce seuil de déclenchement d'une opération (comme la thrombolyse) est fiable et reproductible.
D'autres caractéristiques, buts et avantages de la présente invention apparaîtront à la lecture de la description détaillée qui va suivre, au regard des dessins annexés, donnés à titre d'exemples non limitatifs et sur lesquels:

- les figures 1a et 1b sont des exemples de connexités entre les pixels,
- la figure 2 est un schéma simplifié du corps humain présentant les trois coupes sagittale, frontale et transverse,
- les figures 3a à 3d présentent un exemple d'application d'un procédé de labellisation selon une réalisation possible de l'invention,

- les figures 4a à 4d présentent un exemple d'application d'un procédé de labellisation selon une réalisation possible de l'invention,
- les figures 5a à 5d présentent un exemple d'application d'un procédé de labellisation selon une réalisation possible de l'invention,
- les figures 6a à 6d présente un exemple d'application d'un procédé pour la détermination d'un volume à partir d'image d'un cerveau,
- la figure 7 est un graphe présentant les différentes aires d'un volume à déterminer le long une série de coupe.

Le procédé selon l'invention est préalablement basé sur des traitements appliqués aux images médicales. Parmi ces traitement, on utilise notamment la segmentation et le seuillage.

Segmentation

La segmentation consiste à diviser ou partitionner une image en zones homogènes selon un critère choisi (niveaux de gris, texture, etc.), afin d'en extraire l'information utile, par exemple en individualisant au sein de structures normales des ensembles de forme et/ou de signal.

Seuillage

Le seuillage est un type de segmentation qui permet de binariser une image en choisissant deux valeurs (une minimum et un maximum) comme critère de sélection selon que chaque pixel de l'image appartienne ou non à l'intervalle entre ces deux valeurs.

Connexité

La segmentation permet de partitionner une image en plusieurs ensembles. Un ensemble de points est caractérisé par la connexité qui existe entre tous les points de cet ensemble. On distingue deux types de connexité :

- connexité de complexité 4,
- connexité de complexité 8.

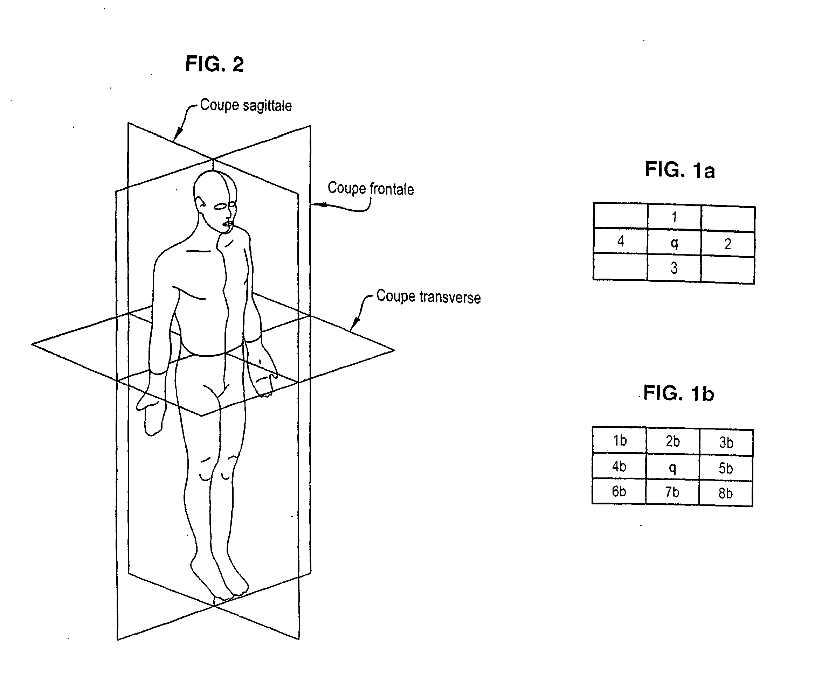

En référence à la figure 1a, une complexité connexité de complexité 4 est établie à partir des pixels voisins horizontaux et verticaux de chaque pixel. Soit p et q deux pixels. Si le pixel p est l'un des 4 voisins (1 à 4) du pixel q, p et q sont connexes de complexité 4.

En référence à la figure 1b, une connexité de complexité 8 est établie à partir des pixels voisons horizontaux, verticaux et diagonaux de chaque pixel. Soit p et q deux pixels. Si le pixel p est l'un des 8 voisins (1b à 8b) du pixel q, p et q sont connexes de complexité 8.

Post-traitement

Le résultat de la segmentation peut cependant ne pas être satisfaisant pour le praticien. Par exemple, le contour de certaines anomalies peut être sur ou sous-estimé. En effet, la segmentation est un traitement dit de "bas niveau", et les images sont souvent segmentées à partir des seules propriétés des pixels.

Les praticiens utilisent non seulement les propriétés des pixels mais aussi des connaissances anatomiques, d'expériences antérieures, etc... Ces connaissances a priori permettent d'améliorer les résultats de la segmentation. Notamment en réduisant les faux positifs et les faux négatifs (c'est-à-dire les ensembles qui ont été segmentés de manière erronée). Cette connaissance a priori est apportée dans l'étape de post-traitement des images segmentées par les techniques d'intelligences artificielles, par exemple les réseaux de neurones et les systèmes d'inférence floue.

Opération de labellisation

A l'issue de l'opération de segmentation, on effectue une opération de labellisation. L'opération de labellisation consiste à affecter dans une image binaire une même valeur (appelée label) à chaque pixel appartenant à un ensemble de pixels connexes. Chaque ensemble de points connexes est ainsi caractérisé par un label. Il est à noter que plusieurs ensembles connexes peuvent avoir le même label.

Les ensembles sont tels qu'aucun des ensembles ne peut présenter de connexité avec un autre ensemble, car alors ces deux ensembles appartiendraient à un même ensemble connexe et donc auraient le même label.

Un label est associé à une valeur qui est généralement choisie dans l'ensemble N*, c'est à dire dans l'intervalle [1, ∞]. Les valeurs de label sont préférentiellement attribuées de manière croissante.

Opération de remplissage connexe

Soit un ensemble de points connexes, présentant des cavités fermées (assimilable à des trous) suite à un traitement d'image (fenêtrage, seuillage comme expliqué précédemment). Ce traitement ayant occasionné la perte d'ensembles connexes, et provoqué ces trous, il est possible de retrouver ces ensembles connexes et de les rattacher à l'ensemble de départ de manière à ne former qu'un seul ensemble connexe (sans trous).
Une opération de fermeture ou de dilatation peut être utilisée préalablement à l'opération de remplissage afin de fermer des cavités ouvertes de l'ensemble connexe de départ. Ces opérations de fermeture ou de dilatation sont bien connues de l'état de l'art et ne seront pas plus détaillées.

Filtre de variance

L'opérateur est un masque de dimension 3x3 (ou plus). Lors de son application sur un point de l'image (ledit point étant au centre du masque), il affecte audit point la variance de l'ensemble des points couverts par le masque.
Ce masque est appliqué à tous les points de l'image sauf la bordure de l'image car il manque des points à l'extérieur de l'image. Plus le masque sera grand plus la bordure de l'image (bordure d'exclusion) devra être grande. Pour un masque de dimension 3x3 la bordure est de dimension 1. On rappelle que la variance est caractéristique de la dispersion de l'échantillon avec une formule du type :

$$\text{Variance= (moyenne de la somme des carrés des valeurs)-(moyenne au carré des valeurs)}$$

Un tel filtre de variance peut être appliqué après un seuillage afin d'améliorer le résultat du seuillage. Cet opérateur remplace avantageusement dans plusieurs applications le filtre passe-bande (filtre de fréquence).

Labellisation 3D

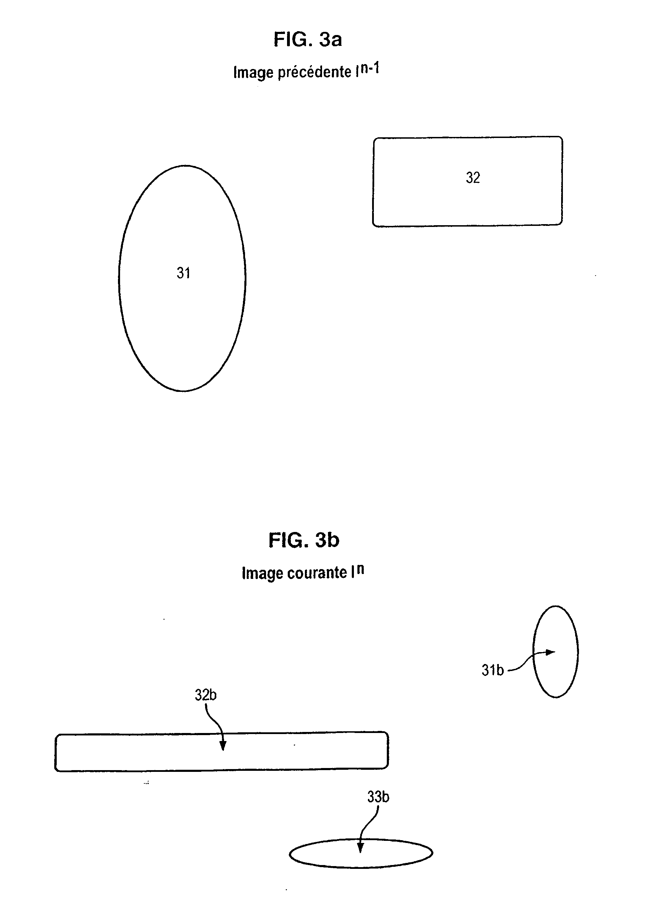

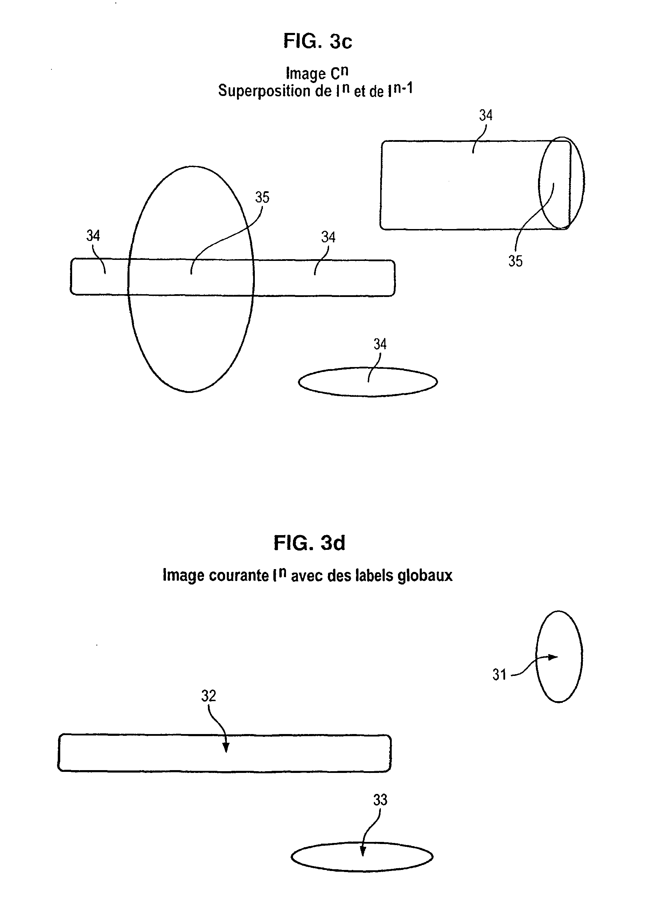

L'objectif de la labellisation 3D est créer un réseau de correspondance sur un ensemble de voxels connexes suivant les 3 plans de l'espace (axial, frontal, sagittal). Le voxel (contraction de « volumetric pixel ») est un pixel en 3D. Le voxel est utilisé pour la représentation d'espaces 3D, en physique ou en imagerie médicale 3D notamment pour le traitement numérique de coupes 2D issues des machines d'investigation médicale comme cité précédemment (Scanner, IRM ...). Ainsi sur une série d'images constituées de pixels, un tel réseau de correspondance entre les pixels des différentes images permet d'établir des ensembles de voxels.
Cette opération de labellisation 3D s'applique à une série d'images se succédant suivant un des 3 plans et représentant différents ensembles de voxels dans l'espace.
Généralement, On travaille sur une série d'images médicales sensiblement parallèles se succédant sur un des plans (axial, frontal, sagittal).
A chaque ensemble connexe obtenu sur une image, on affecte un label avec l'approche suivante : si on superpose deux images successives, les ensembles connexes ayant des parties de communes porteront le même label global. De fait, au fil des images, les voxels constituant un ensemble de points connexes suivant les trois plans porteront le même label.
En référence aux figures 1a à 5d, on entend par « parties », les sous-ensembles des ensembles de la deuxième image résultant de la partition desdits ensembles par superposition des contours des ensembles de la première image aux ensembles de la deuxième image.
Plus précisément, les « parties communes » sont les sous-ensembles des ensembles de la deuxième image dont chaque pixel est commun aux ensembles de la première image et de la deuxième image.
Par extension, on entend par « partie non commune », les sous-ensembles des ensembles de la deuxième image résultant de l'amputation des parties communes auxdits ensembles.
En référence aux figures 3a à 3d, une image appelée $I^{n-1}$ est apportée. L'image comprend plusieurs ensembles connexes, chaque ensemble étant caractérisé par un label global. Le label est global en ce sens qu'il est commun à une ou plusieurs images précédentes traitées.
Puis une image suivante (appelée $I^n$) est fournie représentée à la figure 3b. Après un traitement de l'image, on détermine plusieurs ensembles. Chacun des ensembles a un label dit local ; c'est-à-dire que ces labels ne seront valables seulement pour l'image en cours.

On superpose alors les deux images ($I^n$ et $I^{n-1}$) afin de déterminer les parties communes et les parties non communes des ensembles de la première et de la deuxième image. Cette superposition permet d'obtenir une image $C^n$ représentée à la figure 3c. Cette superposition d'image permet de faire ressortir des parties communes 35 qui sont communes aux ensembles de l'image $I^{n-1}$ et de l'image $I^n$. Complémentairement, cette superposition permet de faire ressortir les parties non-communes 34 qui sont le complémentaire des ensembles de la figure $I^n$ par rapport aux parties communes 35.

On donne alors à chaque partie commune de l'image $I^n$ le label global des ensembles de la première image avec lesquels lesdites parties sont communes permettant ainsi de faire le lien (la correspondance) entre les différentes images. Parallèlement on donne à chaque partie non-commune de la deuxième image étant en contact avec un seul ensemble de l'image $I^{n-1}$ le label global dudit ensemble.

Pour finir, on donne à chaque partie non-commune de la deuxième image n'étant en contact avec aucun ensemble de la première image un nouveau label n'appartenant pas à l'un des ensembles de la première image dans le cas illustré, le label local 33b devient le label global 33.

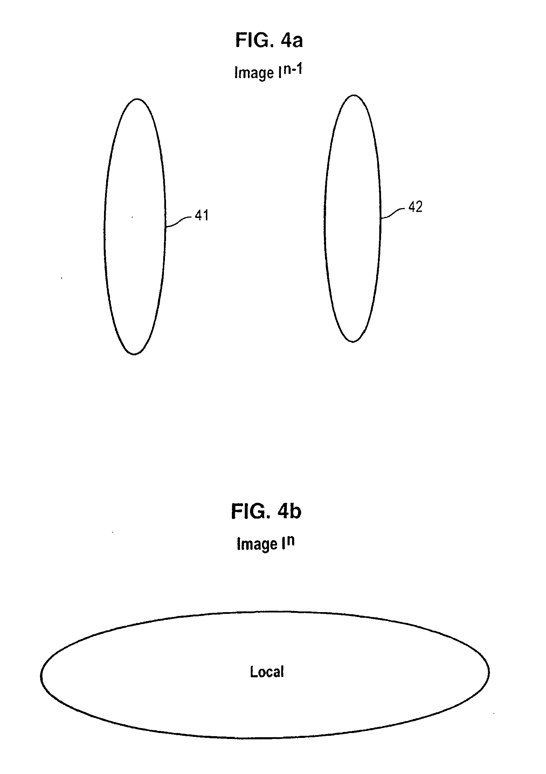

En référence aux figures 4a à 4d, et selon une réalisation possible de la labellisation 3D, le procédé comprend les étapes suivantes :

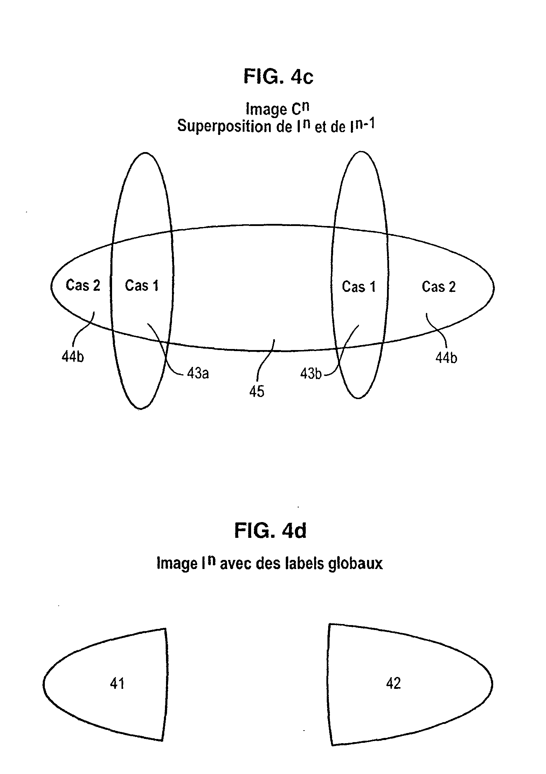

- une image courant, appelée $I^{n-1}$, est apportée (voir figure 4a). Cette image comprend plusieurs ensembles chacun associés à un label global 41 et 42.
- Puis une image suivante (appelée $I^n$) est fournie représentée à la figure 4b. Après un traitement tel que décrit précédemment réalisé sur ladite image, on détermine, notamment à partir de la segmentation de l'image, plusieurs ensembles, chaque ensemble étant caractérisé par un label local.
- On superpose alors les deux images ($I^n$ et $I^{n-1}$) afin de déterminer les parties communes et les parties non communes des ensembles de la première et de la deuxième image. Cette superposition permet d'obtenir une image $C^n$ représentée à la figure 4c. Cette superposition d'image permet de faire ressortir des parties communes 43a et 43b qui sont communes aux ensembles de l'image $I^{n+1}$ et de l'image $I^n$. Complémentairement, cette superposition permet de faire ressortir les parties non-communes 44a, 44b et 45 qui sont le complémentaire des ensembles de la figure $I^n$ par rapport aux parties communes.
- On donne alors à chaque partie commune de l'image $I^n$ le label global des ensembles de la première image avec lesquels lesdites parties sont communes.
- Parallèlement on donne à chaque partie non-commune de la deuxième image étant en contact avec un seul ensemble de l'image $I^{n+1}$ le label global dudit ensemble (parties 44a et 44b).
- Pour finir, la partie 45 non-commune de la deuxième image étant en contact avec deux ensembles de la première image ayant un label global différent est supprimée.
- En référence à la figure 4d, un lien est établit entre les labels globaux 41 et 42 et les parties d'ensemble ainsi labellisées.

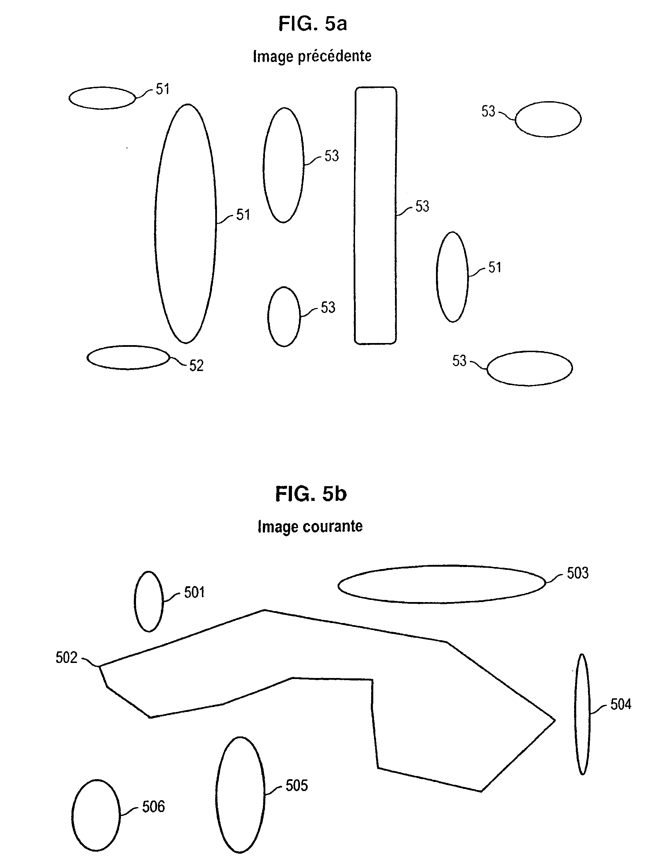

En référence aux figures 5a à 5e, un cas un peu plus complexe est illustré. Le procédé comprend alors les étapes suivantes :

Une image courant, appelée $I^{n-1}$, est apportée (voir figure 5a). Cette image comprend plusieurs ensembles 41 et 42 chacun associés à un label global 51, 52 ou 53.

Puis une image suivante (appelée $I^n$) est fournie représentée à la figure 5b. Après un traitement tel que décrit précédemment réalisé sur ladite image, on détermine, notamment à partir de la segmentation de l'image, plusieurs ensembles, chaque ensemble étant caractérisé par un label local 501, 502, 503, 504, 505 ou 506.

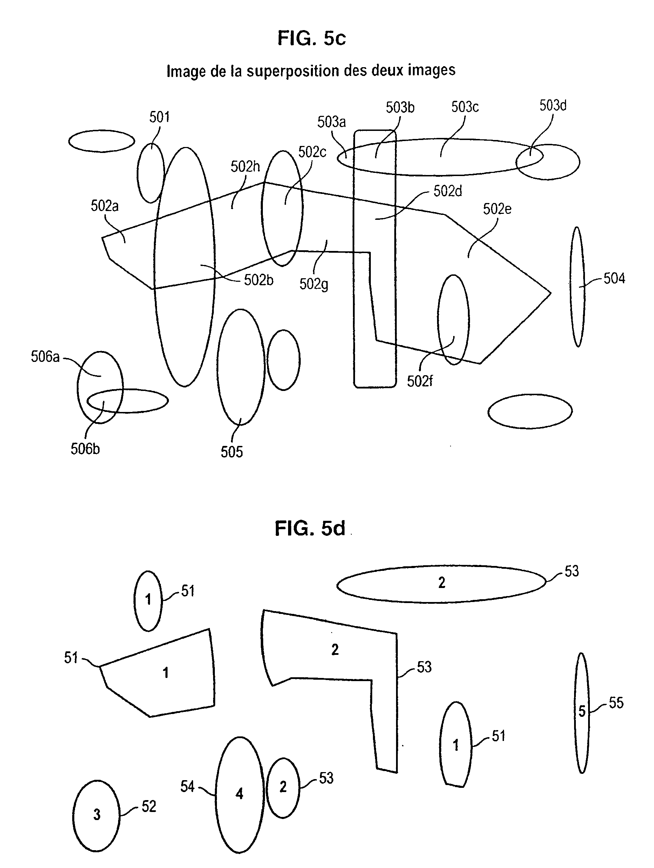

On superpose alors les deux images ($I^n$ et $I^{n-1}$) afin de déterminer les parties communes et les parties non communes des ensembles de la première et de la deuxième image. Cette superposition permet d'obtenir une image $C^n$ représentée à la figure 5c. Cette superposition d'image permet de faire ressortir des parties communes 502b, 502c, 502d, 502f, 503b, 503e et 506b qui sont communes aux ensembles de l'image $I^{n+1}$ et de l'image $I^n$. Complémentairement, cette superposition permet de faire ressortir les parties non-communes qui sont le complémentaire des ensembles de la figure $I^n$ par rapport aux parties communes.

On donne alors à chaque partie commune de l'image $I^n$ le label global des ensembles de la première image avec lesquels lesdites parties sont communes.

Parallèlement on donne à chaque partie non-commune de l'image $I^n$ étant en contact avec un seul ensemble de l'image $I^{n-1}$ le label global dudit ensemble (parties 502a, 501, 503a, 503c, 506a).

Les parties 502h et 502e non-commune de la deuxième image étant en contact avec deux ensembles de la première image ayant un label global différent sont supprimées.

En référence à la figure 5d, un lien est établit entre les labels globaux 51 et 52 et les parties d'ensemble ainsi labellisées. Pour finir, les parties 505 et 504 qui ne sont en contact avec aucun ensemble de l'image $I^{n-1}$ sont labellisées

avec un nouveau label global 54 et 55.

En conclusion, une partie non-commune en contact avec au moins deux ensembles n'ayant pas la même valeur de label global peut :

- soit être supprimée, ce qui permet d'avoir une séparation nette entre deux labels globaux.
- soit se voir affecté une nouvelle valeur de label global, ce qui permet d'avoir une séparation nette entre deux labels globaux tout en gardant l'information de ladite partie.
- soit se voir affecté le label global d'un de ces ensembles, ce qui permet d'être sûr qu'aucune information concernant un label global n'est perdu.

Cette décision est prise selon une règle de décision définie dés le départ. Cette règle permet de définir de quelle manière seront traitées les parties non-communes connexes à au moins deux ensembles n'ayant pas la même valeur de label global. Cette règle peut donc définir qu'une telle partie est supprimée comme illustré aux figures 4a à 4d et 5a à 5d.

Cette règle peut également définir qu'on affecte à une telle partie une nouvelle valeur de label global qui n'a pas encore été utilisé dans le procédé, généralement en incrémentant la valeur du dernier label global affecté.

Cette règle peut également définir qu'on affecte à une telle partie la valeur de label global de l'un des deux ensembles selon une priorité des labels.

Pour éviter cependant que des ensembles ou des parties d'ensemble soient labellisés de manière erronée, on définit des règles selon lesquels certains labels globaux sont compatibles entre eux et d'autres sont incompatibles entre eux. La mise en oeuvre de la règle de décision concernant les parties non-communes différera selon la compatibilité des labels globaux en contact avec ladite partie.

Au cours de la procédure de labellisation, chaque label global est mémorisé et une relation est faite entre les différents pixels appartenant auxdits labels globaux dans un tableau de correspondance, permettant ainsi de faire le lien entre les différentes images de la série d'images.

Si au cours du procédé, pour une image donnée, un ensemble connexe est en contact avec des labels globaux compatibles, ces labels globaux seront dits équivalents entre eux.

L'équivalence entre ces labels globaux provoque par conséquent l'équivalence de tous les labels globaux qui leur sont équivalents. Parmi un ensemble de labels équivalents on choisit la plus petite valeur de label que l'on affecte dans le tableau d'équivalence à tous les labels équivalent.

Si au cours du procédé, pour une image donnée, un ensemble connexe est en contact des labels globaux dont certains sont incompatibles entre eux, on ne modifie pas le tableau de correspondance des labels globaux ; l'incompatibilité de certains de ces labels ne permet pas d'équivalence entre eux.

Selon une règle prédéfinie on pourra :

- Attribuer une nouvelle étiquette globale à cette partie, ou
- supprimer ladite partie, permettant ainsi de créer une séparation nette entre les deux labels globaux.

Il est à noter que chaque pixel d'une image est enregistré avec sa position (3 coordonnées x, y, n° image), son intensité et son numéro de label.

A la fin du procédé de traitement sur la série d'image de départ, on obtient un tableau de correspondance, à partir duquel, on peut reconstituer le réseau d'équivalence de chaque label global (ainsi que l'ensemble de labels équivalents à un label donné) et ainsi reconstituer les ensembles connexes au sens large (les trois plans : axial, frontal, sagittal), c'est-à-dire, retrouver les pixels enregistrés avec un label contenu dans le réseau d'équivalence et établir ainsi les voxels.

Ainsi partir d'un point appartenant à un ensemble de points connexes sur une image de la série, on retrouve l'ensemble de points largement connexes (c'est à dire suivant les trois plans de l'espace) auquel ce point appartient.

Zone d'intérêt pour le praticien

Préalablement au procédé de labellisation, le praticien sélectionne une image sur laquelle il visualise une anomalie (ou zone d'intérêt) qu'il souhaite étudier est la mieux visible. Cette image lui permet de sélectionner préalablement des points à partir desquelles après avoir étiqueté cette image, on obtient les labels des ensembles liés à ces points. Préférentiellement l'ensemble qui comprend les points sélectionnés se voit affecté le label global de valeur 1. Aux autres ensembles de l'image, on affecte le label global de valeur 2.

Le label global de valeur 1 est le label dont le réseau d'équivalence désignera les ensembles connexes recherchés par le praticien.

Le label global de valeur 2 est le label dont le réseau d'équivalence désignant les ensembles connexes ne pouvant pas appartenir à au réseau d'équivalence du label global de valeur 1. Les labels globaux 1 et 2 sont incompatibles.

Lors du traitement de la série d'image, le tableau de correspondance est créé comme décrit précédemment. Lorsque deux labels globaux sont considérés comme équivalents on modifie le tableau en mettant la valeur du label de plus petite valeur dans leur réseau d'équivalence pour les deux labels. Cependant une équivalence n'est jamais possible entre un label global valeur 2 et un label global de valeur 1 : ces deux étiquettes sont incompatibles. Cette règle est très importante et permet d'éviter une « contagion » du label 1 (ensemble recherché par le praticien) à d'autres ensembles de l'image qui ne font en réalité pas partie de l'ensemble recherché.

Il est à noter que, sur une série d'images, la première image traitée n'est pas forcément la première image de la série. Ainsi, il est prévu de choisir une image de départ ce qui permet alors d'obtenir deux séries d'images :

- une première partie de série au départ de cette image allant jusqu'à la dernière image dans le sens ascendant,
- une deuxième partie de série au départ de cette image allant jusqu'à la première image dans le sens descendant.

Ce choix de l'image de départ permet de choisir la meilleure image permettant de distinguer l'anomalie à étudier.

Lors du traitement de la première partie de série, le tableau de correspondance est créé et c'est le même tableau qui est utilisé lors de la deuxième partie de série.

Pour traiter la seconde partie de série, on part de l'image de départ, comme précédemment mais à la différence près que les nouveaux labels globaux qui sont alors attribués lors de la deuxième partie de série, commencent après la dernière valeur de label atteinte lors du traitement de la première série.

En fin de traitement, on obtient le tableau de correspondance, à partir duquel on peut reconstituer le réseau d'équivalence de chaque label et ainsi reconstituer les ensembles connexes au sens large (c'est à dire suivant les trois plans : axial, frontal, sagittal).

Ainsi à partir du label global 1, on retrouve l'ensemble de points largement connexes liés à ce label.

Application à une série d'image IRM d'un cerveau

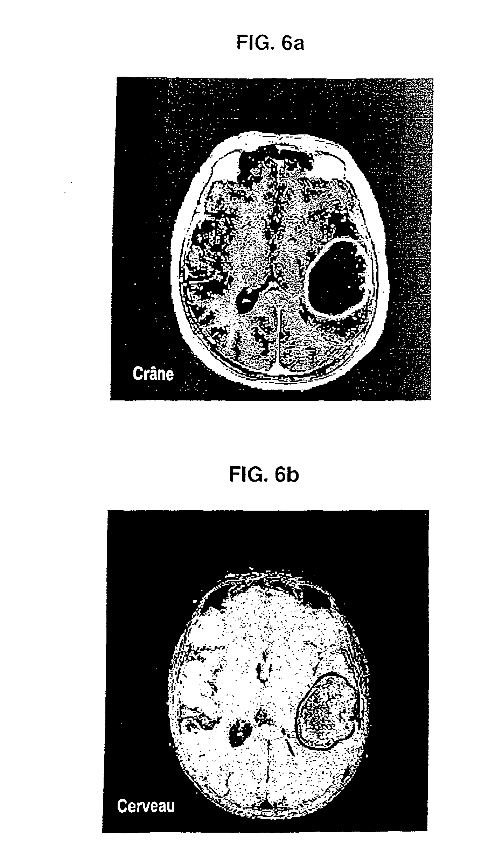

En référence aux figures 6a à 6d, nous allons décrire une application du procédé selon l'invention à une série d'image IRM d'un cerveau.

On dispose initialement d'une série d'images successives dans le plan axial ; ces images proviennent d'un procédé d'imagerie par résonnance magnétique IRM.

L'objectif global pour le praticien est d'identifier une anomalie sur au moins l'une des images de la série (tumeur, avc,...) afin d'effectuer sur cette anomalie les mesures de son choix (par exemple une mesure de volume).

De la série initiale d'image, le praticien extrait un nuage de points ou plus basiquement une série d'image comprenant le début et la fin de cette anomalie.

Segmentation du crâne

Pour chaque image de la série, on calcule à partir de la forme du crâne un ensemble connexe ainsi que le barycentre des points de cet ensemble.

Pour ce faire, on réalise un seuillage simple, c'est-à-dire une binarisation de l'image obtenue avec un seuil maximal et un seuil minimal, afin d'avoir la meilleure segmentation du crâne comme illustré figure 6a, où on voit apparaître clairement la partie osseuse en blanc.

On réalise alors un remplissage connexe, ce qui permet d'avoir la forme pleine du crâne.

Segmentation du cerveau

Pour chaque image de la série et à partir de la zone du crâne calculée précédemment, on calcule à partir de la forme du cerveau.

Pour ce faire on effectue pour chaque image :

- un seuillage de l'image afin d'avoir la meilleure segmentation du cerveau comme illustré à la figure 6b,
- Il est prévu ensuite de réduire la forme du crâne (segmentée précédemment) d'un facteur donné (généralement un facteur de proportion entre 0.99 et 0.9) tout en conservant son centrage dans l'image, permettra de définir une zone d'exclusion au delà de la forme réduit. Ainsi tout point dehors de la forme réduit (et donc susceptible d'appartenir à la masse osseuse du crâne) est automatiquement exclu.
- On réalise également un remplissage connexe du cerveau, permettant d'obtenir la forme pleine du cerveau.

Segmentation de la tumeur

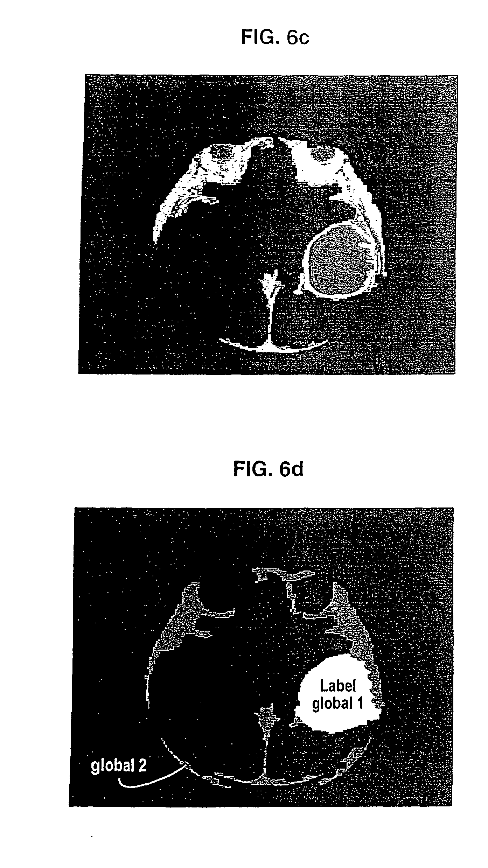

On réalise ensuite un seuillage afin d'avoir la meilleure segmentation de la tumeur (ou d'une tout autre anomalie) comme illustré à la figure 6c. Avantageusement on peut appliquer un filtre variance (par exemple sous la forme d'un masque 3x3) sur l'image initiale avant le seuillage sur l'image résultante.
La zone d'exclusion défini précédemment permet de ne pas prendre en compte le crâne dans le seuillage de la tumeur. On réalise alors un remplissage connexe des différents ensembles de points. La zone d'exclusion permet d'effectuer le remplissage connexe sur tous les éléments à l'intérieur du crâne et non sur le crâne lui-même.
On effectue ensuite une labellisation de l'image (voir figure 6d). Cette labellisation de l'image permet au praticien de définir l'ensemble à étudier (label global de valeur 1) représentant ici la tumeur et l'ensemble extérieur à l'ensemble à étudier (label global de valeur 2). On segmente ainsi la tumeur en indiquant sur l'image de départ les positions d'un point de chaque ensemble connexe constituant la tumeur.
Avantageusement, on peut définir sur l'image de départ des frontières servant à séparer un même ensemble de points connexes en plusieurs ensembles (en séparant par exemple la tumeur du reste de l'image). Ces frontières permettent de disjoindre les ensembles où des parties de la tumeur sont connexes à des éléments considérés comme extérieurs (voir figure 6d).

Calcul volume

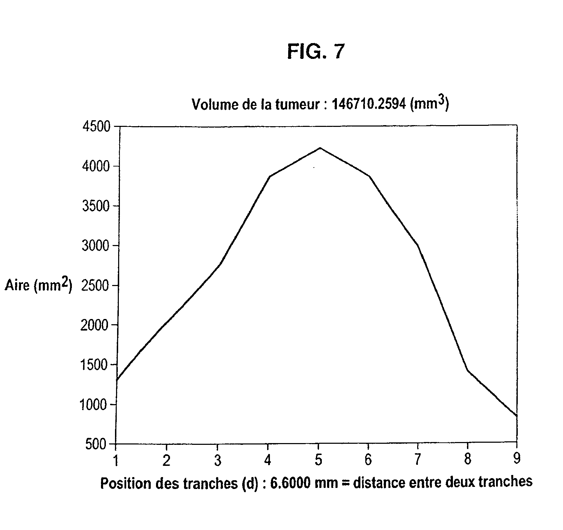

A la fin du procédé et en référence à la figure 7, on réalise un calcul du volume de l'ensemble connexe à étudier (par exemple la tumeur).
A partir de la résolution spatiale de l'image et de l'espacement entre chaque image, il est possible, à partir du compte des voxels de l'ensemble segmenté de déterminer le volume de la tumeur. On calcule donc le volume en faisant une interpolation linéaire entre l'aire des tranches successive de la tumeur.

**Revendications**

**1.** Procédé pour la transmission d'un label entre deux images, le procédé comprenant les étapes suivantes :

- fournir une première image($I^{n-1}$), la première image comprenant plusieurs ensembles de points connectés, chaque ensemble étant **caractérisé par** un label (31, 32, 41, 42, 51, 52, 53),
- fournir une deuxième image ($I^n$),
- déterminer à partir de la deuxième image plusieurs ensembles de points connectés (31b 32b, 33b, 501, 502, 503, 504,505,506),
- superposer les deux images afin de déterminer les parties communes (35, 43a, 43b, 506b, 502b, 502c, 502d, 502f, 503b, 503d) et les parties non communes (34, 44b, 45, 501, 503a, 503c, 502a, 502b, 502g, 502e, 504, 505, 506a) des ensembles de la première et de la deuxième image,
- donner à chaque partie commune de la deuxième image le label de l'ensemble de la première image (31, 44b, 506a, 502a, 503a) avec lequel ladite partie est commune,
- donner à chaque partie non-commune de la deuxième image étant en contact avec un seul ensemble de points connectés de la première image (31, 44b, 506a, 502a, 503a) le label dudit ensemble,
- donner à chaque partie non-commune de la deuxième image n'étant en contact avec aucun ensemble de la première image (34, 501, 504, 505) un nouveau label, Les parties de la deuxième image étant des sous-ensembles des ensembles de la deuxième image résultant de la partition desdits ensembles par superposition des contours des ensembles de la première image aux ensembles de la deuxième image.

**2.** Procédé selon la revendication 1, **caractérisé en ce qu'**il comprend une étape supplémentaire selon laquelle chaque partie non-commune de la deuxième image étant en contact avec au moins deux ensembles de points connectés de la première image ayant un label différent est supprimé (45, 502b, 502g, 502e, 503c).

**3.** Procédé selon la revendication 1, **caractérisé en ce qu'**il comprend une étape supplémentaire selon laquelle un nouveau label est donné à chaque partie non-commune de la deuxième image étant en contact avec au moins deux ensembles de points connectés de la première image ayant un label différent (45, 502b, 502g, 502e, 503c).

**4.** Procédé selon la revendication 1, **caractérisé en ce qu'**il comprend une étape supplémentaire selon laquelle chaque partie non-commune de la deuxième image étant en contact avec au moins deux ensembles de la première image ayant un label différent reçoit le label de l'un des deux ensembles (45, 502b, 502g, 502e, 503c).

**5.** Procédé selon l'une des revendications 1 à 4, dans lequel chaque label est **caractérisé par** une valeur, le procédé comprenant en outre l'étape suivante :

- créer une équivalence entre les labels de deux ensembles de la première image en contact avec un même ensemble de la deuxième image.

**6.** Procédé selon la revendication 5, dans lequel plusieurs labels sont incompatibles de sorte qu'aucune équivalence n'est crée entre ces labels.

**7.** Procédé selon l'une des revendications 1 à 6, **caractérisé en ce que** l'étape de détermination des ensembles comprend au moins l'une des étapes de traitement suivantes : segmentation, application d'un filtre de variance, étape de remplissage connexe.

**8.** Procédé pour la détermination de volumes à partir de différentes images, chaque image représentant des plans successifs sensiblement parallèles, le procédé comprenant les étapes suivantes :

- choisir une image de départ parmi l'ensemble des images,
- sélectionner des points sur l'image de départ dont on souhaite déterminer le volume,
- déterminer plusieurs ensembles de points connectés sur l'image de départ de façon à ce que les points sélectionnés appartiennent au même ensemble, ledit ensemble ayant un label principal, les autres ensembles ayant un label secondaire,

le procédé étant **caractérisé en ce qu'**il comprend en outre les étapes suivantes :

- mettre en oeuvre le procédé de transmission de label selon l'une des revendications 1 à 7 sur l'ensemble des images,
- déterminer le volume correspondant aux ensembles de chaque image comprenant ledit label spécifique.

**9.** Procédé pour la détermination de volume selon la revendication 8 dans lequel l'étape de détermination de volume comprend une étape d'intégration des aires des ensembles de chaque image comprenant ledit label spécifique.

**10.** Procédé pour la détermination de volume à partir d'images médicales de scanner ou d'IRM **caractérisé en ce qu'**il comprend l'ensemble des étapes du procédé selon la revendication 8 ou 9.

**11.** Procédé pour la détermination de volume à partir d'images de scanner ou d'IRM d'un cerveau d'un patient, **caractérisé en ce qu'**il comprend l'ensemble des étapes du procédé selon les revendications 8 ou 9, et **en ce qu'**il comprend préalablement les étapes suivantes :

- déterminer sur l'image de départ l'ensemble correspondant au crâne du patient,
- déterminer sur l'image de départ l'ensemble correspondant au cerveau du patient.

**12.** Dispositif pour la détermination de volume à partir d'images médicales par exemple de scanner ou d'IRM **caractérisé en ce qu'**il comprend des moyens de mise en oeuvre de l'ensemble des étapes du procédé selon la revendication 8 ou 9.

**13.** Dispositif selon la revendication précédente, lequel comprend en outre un appareillage d'acquisition desdites images médicales.

**14.** Produit de programme d'ordinateur comprenant des instructions de code de programme enregistré sur un support utilisable dans un ordinateur pour la mise en oeuvre de l'ensemble des étapes du procédé selon la revendication 8 ou 9.

**Claims**

**1.** A method for transmitting a label between two images, the method comprising the following steps:

- providing a first image ($I^{n-1}$), the first image comprising several sets of connected points, each set being **characterised by** a label (31, 32, 41, 42, 51, 52, 53),
- providing a second image ($I^n$),
- determining from the second image several sets of connected points (31b, 32b, 33b, 501, 502, 503, 504, 505, 506),
- superposing both images in order to determine the common portions (35, 43a, 43b, 506b, 502b, 502c, 502d, 502f, 503b, 503d) and the non-common portions (34, 44b, 45, 501, 503a, 503c, 502a, 502b, 502g, 502e, 504, 505, 506a) of the sets of the first and of the second image,
- giving to each common portion of the second image, the label of the set of the first image (31, 44b, 506a, 502a, 503a) with which said portion is common,
- giving to each non-common portion of the second image being in contact with a single set of connected points of the first image (31, 44b, 506a, 502a, 503a), the label of said set,
- giving to each non-common portion of the second image not being in contact with any set of the first image (34, 501, 504, 505), a new label,
the portions of the second image being subsets of the sets of the second image resulting from the partition of said sets by superposition of the contours of the sets of the first image to the sets of the second image.

2. A method according to claim 1, **characterised in that** it comprises an additional step according to which each non-common portion of the second image being in contact with at least two sets of connected points of the first image having a different label, is suppressed (45, 502b, 502g, 502e, 503c).

3. A method according to claim 1, **characterised in that** it comprises an additional step according to which a new label is given to each non-common portion of the second image being in contact with at least two sets of connected points of the first image having a different label (45, 502b, 502g, 502e, 503c).

4. A method according to claim 1, **characterised in that** it comprises an additional step according to which each non-common portion of the second image being in contact with at least two sets of the first image having a different label, receives the label of one of the two sets (45, 502b, 502g, 502e, 503c).

5. A method according to any of claims 1 to 4, wherein each label is **characterised by** a value, the method further comprising the following step:

   - creating equivalence between the labels of two sets of the first image in contact with a same set of the second image.

6. A method according to claim 5, wherein several labels are incompatible so that no equivalence is created between these labels.

7. A method according to any of claims 1 to 6, **characterised in that** the step for determining the sets comprises at least one of the following processing steps: segmentation, application of a variance filter, related filling step.

8. A method for determining volumes from different images, each image representing successive substantially parallel planes, the method comprising the following steps:

   - selecting a starting image from the set of images,
   - selecting points on the starting image for which determination of the volume is desired,
   - determining several sets of connected points on the starting image so that the selected points belong to the same set, said set having a primary label, the other sets having a secondary label,

   the method being **characterised in that** it further comprises the following steps:

   - applying the label transmission method according to any of claims 1 to 7 on the set of images,
   - determining the volume corresponding to the sets of each image comprising said specific label.

9. A method for determining a volume according to claim 8, wherein the volume determination step comprises a step for integrating the areas of the sets of each image comprising said specific label.

10. A method for determining a volume from scanner or MRI medical images **characterised in that** it comprises the whole of the steps of the method according to claim 8 or 9.

**11.** A method for determining a volume from scanner or MRI images of a brain of a patient, **characterised in that** it comprises the whole of the steps of the method according to claims 8 or 9, and **in that** it first comprises the following steps:

- determining on the starting image the set corresponding to the skull of the patient,
- determining on the starting image the set corresponding to the brain of the patient.

**12.** A device for determining a volume from for example scanner or MRI medical images **characterised in that** it comprises means for applying the whole of the steps of the method according to claim 8 or 9.

**13.** The device according to the preceding claim, which further comprises an apparatus for acquiring said medical images.

**14.** An output of a computer program comprising program code instructions recorded on a medium, which may be used in a computer for applying the whole of the steps of the method according to claim 8 or 9.

**Patentansprüche**

**1.** Verfahren zur Übertragung einer Markierung zwischen zwei Bildern, wobei das Verfahren folgende Schritte umfasst:

- Bereitstellen eines ersten Bildes ($I^{n-1}$), wobei das erste Bild mehrere verbundene Punktegruppen umfasst, wobei jede Gruppe durch eine Markierung (31, 32, 41, 42, 51, 52, 53) **gekennzeichnet** ist,
- Bereitstellen eines zweiten Bildes ($I^n$),
- Bestimmen mehrerer verbundener Punktegruppen (31b, 32b, 33b, 501, 502, 503, 504, 505, 506) ausgehend vom zweiten Bild,
- Überlagern der zwei Bilder zum Bestimmen der gemeinsamen Bereiche (35, 43a, 43b, 506b, 502b, 502c, 502d, 502f, 503b, 503d) und der nicht gemeinsamen Bereiche (34, 44b, 45, 501, 503a, 503c, 502a, 502b, 502g, 502e, 504, 505, 506a) der Gruppen des ersten und des zweiten Bildes,
- Versehen jedes gemeinsamen Bereiches des zweiten Bildes mit der Markierung jener Gruppe des ersten Bildes (31, 44b, 506a, 502a, 503a), die dem Bereich gemeinsam ist,
- Versehen jedes nicht gemeinsamen Bereiches des zweiten Bildes, der mit einer einzelnen verbundenen Punktegruppe des ersten Bildes (31, 44b, 506a, 502a, 503a) in Berührung ist, mit der Markierung der Gruppe,
- Versehen jedes nicht gemeinsamen Bereiches des zweiten Bildes, der mit keiner Gruppe des ersten Bildes (34, 501, 504, 505) in Berührung ist, mit einer neuen Markierung,
wobei die Bereiche des zweiten Bildes Untergruppen der Gruppen des zweiten Bildes sind, die aus der Aufteilung der Gruppen durch die Überlagerung der Konturen der Gruppen des ersten Bildes und der Gruppen des zweiten Bildes resultieren.

**2.** Verfahren nach Anspruch 1, **dadurch gekennzeichnet, dass** es einen zusätzlichen Schritt umfasst, wonach jeder nicht gemeinsame Bereich des zweiten Bildes, der mit mindestens zwei verbundenen Punktegruppen des ersten Bildes mit unterschiedlicher Markierung in Berührung ist, gelöscht wird (45, 502b, 502g, 502e, 503c).

**3.** Verfahren nach Anspruch 1, **dadurch gekennzeichnet, dass** es einen zusätzlichen Schritt umfasst, wonach jeder nicht gemeinsame Bereich des zweiten Bildes, der mit mindestens zwei verbundenen Punktegruppen des ersten Bildes mit unterschiedlicher Markierung (45, 502b, 502g, 502e, 503c) in Berührung ist, mit einer neuen Markierung versehen wird.

**4.** Verfahren nach Anspruch 1, **dadurch gekennzeichnet, dass** es einen zusätzlichen Schritt umfasst, wonach jeder nicht gemeinsame Bereich des zweiten Bildes, der mit mindestens zwei Gruppen des ersten Bildes mit unterschiedlicher Markierung in Berührung ist, die Markierung einer der zwei Gruppen erhält (45, 502b, 502g, 502e, 503c).

**5.** Verfahren nach einem der Ansprüche 1 bis 4, wobei jede Markierung durch einen Wert **gekennzeichnet** ist, wobei das Verfahren ferner folgenden Schritt umfasst:

- Herstellen einer Äquivalenz zwischen den Markierungen von zwei Gruppen des ersten Bildes, die mit einer gleichen Gruppe des zweiten Bildes in Berührung sind.

**6.** Verfahren nach Anspruch 5, wobei mehrere Markierungen inkompatibel sind, so dass keine Äquivalenz zwischen diesen Markierungen hergestellt wird.

**7.** Verfahren nach einem der Ansprüche 1 bis 6, **dadurch gekennzeichnet, dass** der Schritt des Bestimmens der Gruppen mindestens einen der folgenden Bearbeitungsschritte umfasst: Segmentierung, Anwendung eines Varianzfilters, Schritt des damit verbundenen Füllens.

**8.** Verfahren zur Volumenbestimmung ausgehend von unterschiedlichen Bildern, wobei jedes Bild aufeinander folgende, im Wesentlichen parallele Ebenen darstellt, wobei das Verfahren folgende Schritte umfasst:

- Auswählen eines Ausgangsbildes von der Gesamtheit der Bilder,
- Festlegen jener Punkte auf dem Ausgangsbild, von denen das Volumen bestimmt werden soll,
- Bestimmen mehrerer verbundener Punktegruppen auf dem Ausgangsbild, so dass die festgelegten Punkte einer gleichen Gruppe angehören, wobei die Gruppe eine Hauptmarkierung aufweist, wobei die anderen Gruppen eine Nebenmarkierung aufweisen,

wobei das Verfahren **dadurch gekennzeichnet ist, dass** es ferner folgende Schritte umfasst:

- Anwenden des Verfahrens zur Markierungsübertragung nach einem der Ansprüche 1 bis 7 auf die Gesamtheit der Bilder,
- Bestimmen des Volumens, das den Gruppen jedes Bildes mit der spezifischen Markierung entspricht.

**9.** Verfahren zur Volumenbestimmung nach Anspruch 8, wobei der Schritt der Volumenbestimmung einen Schritt der Integration der Flächeninhalte der Gruppen jedes Bildes mit der spezifischen Markierung umfasst.

**10.** Verfahren zur Volumenbestimmung ausgehend von medizinischen Scanner- oder MRT-Bildern, **dadurch gekennzeichnet, dass** es die Gesamtheit der Schritte des Verfahrens nach Anspruch 8 oder 9 umfasst.

**11.** Verfahren zur Volumenbestimmung ausgehend von medizinischen Scanner- oder MRT-Bildern von einem Gehirn eines Patienten, **dadurch gekennzeichnet, dass** es die Gesamtheit der Schritte des Verfahrens nach Anspruch 8 oder 9 umfasst und **dadurch**, dass es vorab folgende Schritte umfasst:

- Bestimmen jener Gruppe auf dem Ausgangsbild, die dem Schädel des Patienten entspricht,
- Bestimmen jener Gruppe auf dem Ausgangsbild, die dem Gehirn des Patienten entspricht.

**12.** Vorrichtung zur Volumenbestimmung ausgehend von medizinischen beispielsweise Scanner- oder MRT-Bildern, **dadurch gekennzeichnet, dass** sie Mittel für die Anwendung der Gesamtheit der Schritte des Verfahrens nach Anspruch 8 oder 9 umfasst.

**13.** Vorrichtung nach dem vorhergehenden Anspruch, welche ferner ein Gerät zur Erfassung der medizinischen Bilder umfasst.

**14.** Programmcodeanweisungen enthaltendes Computerprogrammprodukt, das auf einem computerfähigen Träger für die Anwendung der Gesamtheit der Schritte des Verfahrens nach Anspruch 8 oder 9 gespeichert ist.

FIG. 1a

| | 1 | |
| 4 | q | 2 |
| | 3 | |

FIG. 1b

| 1b | 2b | 3b |
| 4b | q | 5b |
| 6b | 7b | 8b |

FIG. 2

Coupe sagittale

Coupe frontale

Coupe transverse

EP 2 171 687 B1

## FIG. 3a

Image précédente $I^{n-1}$

31

32

## FIG. 3b

Image courante $I^n$

32b

31b

33b

15

## FIG. 3c

Image $C^n$
Superposition de $I^n$ et de $I^{n-1}$

34

35

34

34

35

34

## FIG. 3d

Image courante $I^n$ avec des labels globaux

31

32

33

**FIG. 4a**

Image $I^{n-1}$

41

42

**FIG. 4b**

Image $I^n$

Local

## FIG. 4c

Image $C^n$
Superposition de $I^n$ et de $I^{n-1}$

Cas 2   Cas 1        Cas 1   Cas 2

44b        43a    45   43b        44b

## FIG. 4d

Image $I^n$ avec des labels globaux

41        42

EP 2 171 687 B1

# FIG. 5a

Image précédente

51

51

53

53

53

53

51

52

53

# FIG. 5b

Image courante

501

503

502

504

506

505

19

## FIG. 5c

Image de la superposition des deux images

## FIG. 5d

FIG. 6a

FIG. 6b

## FIG. 6c

## FIG. 6d

FIG. 7

Volume de la tumeur : 146710.2594 (mm$^3$)

Aire (mm$^2$)

Position des tranches (d) : 6.6000 mm = distance entre deux tranches